# EUROPEAN PATENT APPLICATION

(11) **EP 4 725 917 A1**
(43) Date of publication of application: **15.04.2026**
(21) Application number: 24206290.9
(22) Date of filing: 12.10.2024
(51) Int. Cl.: C02F 1/78

(54) **A METHOD OF WATER OZONATION IN CLOSED SYSTEMS, ESPECIALLY IN YACHTS AND CAMPERS**

(71) Applicant: Sosnowski Sp. z o.o. Sp. k., 80-557 Gdansk (PL)
(72) Inventor: SOSNOWSKI, Rafa, 80-557 Gda sk (PL)
(74) Representative: Czub, Krzysztof

(57) **Abstract**

A method of water ozonation in closed systems, especially in yachts and campers, characterized in that ozone is produced in a pressure ozone generator (1) in a chamber with increased pressure, the ozone generator (1) is then activated and ozonises the water in at least one fresh water tank (3) by injecting ozone into it at a pressure of 0,05 MPa to 0,2 MPa (0,5 bar - 2 bar), and after the primary phase of ozonisation of the water in at least one tank (3), the solenoid valves of the water system in the cold water circuit (10A, 10C) are opened for 1-5 minutes and the solenoid valves of the water system in the hot water circuit (10B, 10D) are opened for 5-10 minutes, and the individual water circuits (to individual receivers 8A, 8B) are flushed with ozonated water. The ozonation time is advantageously determined by the volume of the fresh water tank and the output of the ozone generator according to the formula: t = V/80G, where "t" is the time (expressed in hours: h), "V" is the volume of the water tank (expressed in litres: 1), and "G" is the mass flow rate (ozone generator output, expressed in grams per hour: g/h).

## Description

The subject matter of the invention is a method of water ozonation in closed systems, in particular in yachts, motorhomes and other installations with water tanks.

Users of yachts, motorhomes and other installations with water storage tanks encounter the problem of unpleasant water odour and foaming when water use is resumed after a prolonged shutdown of the system in question, e.g. installed on a yacht or motorhome. If the water is used continuously, the process described is very slow, whereas if it is used infrequently, the water becomes practically unfit for consumption within 1-2 months. This phenomenon is due to the development of various bacteria, viruses and other germs in such closed installations. If the installation is not used for a longer period of time and there is no water circulation, the water is subject to decay processes. These processes depend on a number of factors, on the quality of the water poured into the tanks, on the duration of the shutdown, on the ambient and water temperature. Getting rid of bacteria, viruses and germs requires disinfection of the system, which is most often done with chlorine compounds. The problem described can also be prevented by oxygenating the water and continuously moving the water through the system.

In the solution according to the invention, ozone is produced in a pressure ozone generator in a chamber with increased pressure, the ozone generator is then activated and ozonises the water in at least one fresh water tank by injecting ozone into it at a pressure of 0,05 MPa to 0,2 MPa (0,5 bar - 2 bar). The pressure depends on the size of the tank, the distance of the ozone generator from the tank, the diameter of the pipes. The ozonation time is advantageously determined by the volume of the fresh water tank and the output of the ozone generator according to the formula: t = V/80G, where "t" is the time (expressed in hours: h), "V" is the volume of the water tank (expressed in litres: 1), and "G" is the mass flow rate (ozone generator output, expressed in grams per hour: g/h). The operating time of the ozone generator is programmed in the system controller. After the primary phase of ozonisation of the water in at least one tank, the solenoid valves of the water system in the cold water circuit are opened for 1-5 minutes and the solenoid valves of the water system in the hot water circuit are opened for 5-10 minutes, and the individual water circuits (to individual receivers) are flushed with ozonated water. If more water tanks are installed in the system after the flushing process for the first (respective) tank has been completed, the process is applied for any subsequent tank/tanks.

The advantages of ozone and its effects are generally known. Ozone is characterised by its sterilising properties. It destroys bacteria, viruses, unpleasant odours. This effect is due to the strong oxidising properties of ozone. Ozone has a relatively short decomposition time, so after a few tens of minutes there is no trace of it - it turns into oxygen. Injecting ozone at pressure results in better distribution of ozone in the water and is effective even with larger tanks. Increased pressure also has the advantage that the ozone generator can be installed anywhere in the installation, particularly in a yacht or motorhome, and ozone is delivered to the tank or tanks in any part of the yacht/vehicle. These distances sometimes range from a few metres to a dozen or even tens of metres.

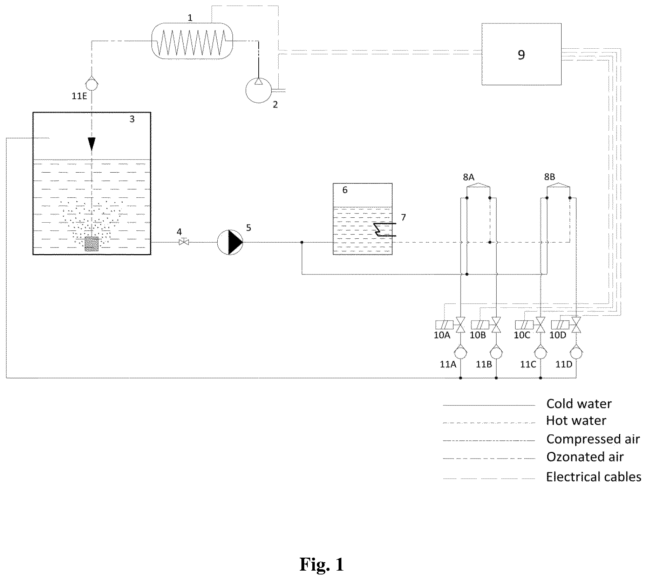

The solution according to the invention is shown in Fig. 1, which schematically illustrates the device system used in the method of ozonating water in closed installations.

The system used for ozonation of water in closed installations consists of the following elements: pressure ozone generator (1) with a capacity of 10 g/h, air compressor (fan) (2), cold water tank (3) with diffuser, capacity of 200 litres, ball valve (4), water pump (5), cold water system, hot water storage tank (6), water heater (7), hot water system, kitchen tap (8A) and bathroom tap (8B), system controller (9), electro-valves: solenoid valve for cold water circuit of the kitchen mixer (10A), solenoid valve for hot water circuit of the kitchen mixer (10B), solenoid valve for cold water circuit of the bathroom mixer (10C), solenoid valve for hot water circuit of the bathroom mixer (10D) with non-return valves: non-return valve for cold water circuit of the kitchen mixer (11A), non-return valve for hot water circuit of the kitchen mixer (11B), non-return valve for the cold water circuit of the bathroom mixer (11C), non-return valve for the hot water circuit of the bathroom mixer (11D), non-return valve for the water ozone system (11E).

Before using the system for the first time, the operating time of the ozone generator (1) is programmed in the system controller (9). For the tank (3) with a volume of 200 litres, the ozonation time with the ozone generator (1) with a mass flow rate (output) of 10 g/h is 0,25 hours (15 minutes). In the pressure ozone generator (1) ozone is produced in a chamber with increased pressure, then the ozone generator (1) is activated and the water in the fresh water tank (3) is ozonised by injecting ozone into it at a pressure of 0,1 MPa (1 bar) over a period of 0,25 hours (15 minutes). After the primary phase of ozonisation of the water the solenoid valves of the water system in the cold water circuit (10A, 10C) are opened for 3 minutes and the solenoid valves of the water system in the hot water circuit (10B, 10D) are opened for 7 minutes, and the individual water circuits (to individual receivers 8A, 8B) are flushed with ozonated water.

## Claims

1. A method of water ozonation in closed systems, especially in yachts and campers, **characterized in that** ozone is produced in a pressure ozone generator (1) in a chamber with increased pressure, the ozone generator (1) is then activated and ozonises the water in at least one fresh water tank (3) by injecting ozone into it at a pressure of 0,05 MPa to 0,2 MPa (0,5 bar - 2 bar), and after the primary phase of ozonisation of the water in at least one tank (3), the solenoid valves of the water system in the cold water circuit (10A, 10C) are opened for 1-5 minutes and the solenoid valves of the water system in the hot water circuit (10B, 10D) are opened for 5-10 minutes, and the individual water circuits (to individual receivers 8A, 8B) are flushed with ozonated water.

2. A method according to the claim 1, **characterized in that** the ozonation time is determined by the volume of the fresh water tank and the output of the ozone generator according to the formula: t = V/80G, where "t" is the time (expressed in hours: h), "V" is the volume of the water tank (expressed in litres: 1), and "G" is the mass flow rate (ozone generator output, expressed in grams per hour: g/h).
